(19) Europäisches Patentamt

European Patent Office

Office européen des brevets

(11) **EP 1 005 658 B1**

(12) **EUROPEAN PATENT SPECIFICATION**

(45) Date of publication and mention
of the grant of the patent:
**31.03.2004 Bulletin 2004/14**

(51) Int Cl.⁷: **G01V 15/00**

(86) International application number:
**PCT/GB1998/002479**

(21) Application number: **98939744.3**

(22) Date of filing: **19.08.1998**

(87) International publication number:
**WO 1999/009436 (25.02.1999 Gazette 1999/08)**

(54) **IMPROVEMENTS RELATING TO SURGICAL DEVICES AND THEIR LOCATION**

VERBESSERUNG IN BEZUG AUF CHIRURGIEGERÄTE UND IHRE LOKALISIERUNG

AMELIORATIONS APPORTEES AUX INSTRUMENTS CHIRURGICAUX ET A LEUR LOCALISATION

(84) Designated Contracting States:
**DE FR GB**

(30) Priority: **19.08.1997 GB 9717574**
**25.09.1997 US 937563**
**21.11.1997 GB 9724695**

(43) Date of publication of application:
**07.06.2000 Bulletin 2000/23**

(73) Proprietor: **Flying Null Limited**
**Harston, Cambridge CB2 5NH (GB)**

(72) Inventors:
• **ENGLAND, Mark**
**Cambridge CB4 6DG (GB)**
• **DAMES, Andrew, Nicholas**
**Cambridge CB4 1HU (GB)**
• **CROSSFIELD, Michael, David**
**Cambridge CB1 6SD (GB)**

(74) Representative: **Abrams, Michael John**
**Haseltine Lake & Co,**
**Imperial House,**
**15-19 Kingsway**
**London WC2B 6UD (GB)**

(56) References cited:
**EP-A- 0 320 623**      **EP-A- 0 754 954**
**WO-A-96/31790**      **US-A- 5 320 100**
**US-A- 5 425 367**

• **COUDERCHON G ET AL: "PRINCIPLES OF A MAGNETIC METHOD FOR LABELLING MOVING ITEMS" IEEE TRANSACTIONS ON MAGNETICS, vol. 17, no. 6, 1 November 1981, pages 2988-2990, XP002008885**

## Description

This invention relates to the location of surgical devices within the human or animal body and, more particularly, is concerned with such systems using magnetic principles.

The invention is of particular benefit as applied to catheter location, but is not limited to this field of application; it may also, for example, find application in the locating of prostheses, needles, ports and other surgical devices which may deliberately or accidentally enter the human or animal body.

The magnetic principles used in this invention are those suitable for remote detection of a small magnetic marker. A preferred detection system is that based on Flying Null technology; this technology is described, for example, in our PCT Patent Publication No. WO 96/31790.

According to one aspect of the present invention, there is provided a method of determining the position and orientation of a surgical device within the human or animal body, which method comprises the steps of:

i) inserting the surgical device into the body together with a magnetically active marker which is associated with a predetermined location on the surgical device, the marker comprising high permeability, low coercivity magnetic material and a magnetic bias element;

ii) generating a rotating magnetic field in the vicinity of the surgical device, said rotating magnetic field comprising a rotating DC bias field component;

iii) sensing the position and orientation of the marker, and hence of the surgical device, by remotely detecting the magnetic response of said marker to said rotating magnetic field, wherein the field created by the magnetic bias element, when subjected to the rotating magnetic field, causes the marker to give an asymmetric magnetic response for marker orientations 180 degrees apart.

As indicated above, this method is very useful when the surgical device in question is a catheter. In such a case, the marker is advantageously located close to the tip of the catheter (i.e. that end of the catheter which first enters the body). The marker may be provided on a surface of the catheter itself, or it may be provided on a guide wire used during insertion of the catheter.

The nature of the marker will be selected according to the specific circumstances of its intended use; it will, however, generally be formed from a high permeability, low coercivity magnetic material. Typically, the marker will be in the form of a thin film, a wire or a strip.

A surgical device, e.g. a catheter or a prosthesis, which may be used in conjunction with the present invention, is provided, at a predetermined location, with a magnetically active marker, the marker comprising high permeability, low coercivity magnetic material and a magnetic bias element. The marker can be very small and therefore does not interfere with the operation of the surgical device.

According to a third aspect of the present invention, there is provided a system for use in determining the position and orientation of a surgical device within the human or animal body, which system comprises:

(i) a surgical device which carries, at a predetermined location, a magnetically active marker comprising high permeability, low coercivity magnetic material and a magnetic bias element;

(ii) means for generating a rotating magnetic field comprising a rotating DC bias field component; and

(iii) means for detecting the magnetic response of the marker to the rotating magnetic field, wherein the field created by the magnetic bias element, when subjected to the rotating magnetic field, causes the marker to give an asymmetric magnetic response for marker orientations 180 degrees apart.

While the invention has relatively wide applicability in surgical procedures, it will be described hereafter in relation to one embodiment, namely the location of catheters.

The use of catheters for drug delivery and other medical/surgical procedures is increasing. Typically, catheters are inserted via a major blood vessel in the leg or arm of the patient. This is conventionally done by inserting a guide wire into the selected blood vessel, and passing the catheter over the wire in the manner of a sheath. Once the catheter is inserted, the surgeon has to ensure that it reaches the desired site of action. This is conventionally achieved by attaching a coil set to the wire over which the catheter is carried, and then sensing the location of the coil. This requires an electrical connection between the coil set within the patient's body and the exterior.

Catheter location systems are discussed in WO 96/31790 and EP 0320623 which are based upon magnetic interaction principals. These methods however, suffer from the disadvantage that while they allow the presence of a magnetic marker to be detected, they do not allow an accurate determination of marker orientation to be made.

Catheter detection techniques are also known, such as those described in US 5320100 and EP 0754954, which rely upon magnetic resonance imaging (MRI), together with a simultaneously applied radio frequency signal, to remotely locate markers. MRI methods operate by detecting nuclear spin resonance techniques in order to differentiate between materials of different densities. The use of magnetic induction fields is also known to locate surgical devices in the body. Methods employing this technique are discussed in US 5425367.

The current generation of catheter location systems, use a hand-held receiver unit, connected to an active marker on the catheter by a cable. The receiver is swept over the area of the body where the end of catheter is expected to be, and an audible indication of proximity is given, together with a visual indication of the direction that the catheter is pointing in. As the receiver passes over the plane of the tag, an audible beep is heard.

Furthermore, once the catheter is correctly positioned, with its tip at the desired site of action, the locating wire (with the coil set which it carries) is withdrawn from the patient, leaving the catheter in place. After withdrawal of the coil set, it is virtually impossible to determine the location of the catheter tip; the surgeon has to assume that there has been no movement of the catheter during or after withdrawal of the wire. This assumption, at best, is unreliable and may, in critical applications, be dangerous.

In the present invention, the tag is made from a high permeability magnetic material (such as those described elsewhere for making tags for Flying Null systems). No electrical connection is required, which is a major advantage, as the ability to sterilise the catheter is not affected by the presence of the tag. All the other functionality of the existing catheter location systems can be implemented.

In the description which follows, the invention will be described in relation to one specific embodiment. The system uses proprietary Flying Null technology, based on the existing Flying Null Reader electronics, to determine the position and orientation of the tag. The accompanying drawings are, briefly, as follows:

Figure 1 illustrates the basis of operation of the catheter location system;

Figure 2 is a block diagram of the components of the system;

Figure 3 illustrates one advantageous configuration for the receive coil in the detection apparatus;

Figure 4 illustrates the operation of an orientation-determining technique;

Figure 5 illustrates the placement of a catheter in the body of a human patient;

Figure 6 illustrates an alternative receiver coil arrangement to that of Figure 3; and

Figure 7 demonstrates the effect on the receive coils response by the incorporation of one of the coil components.

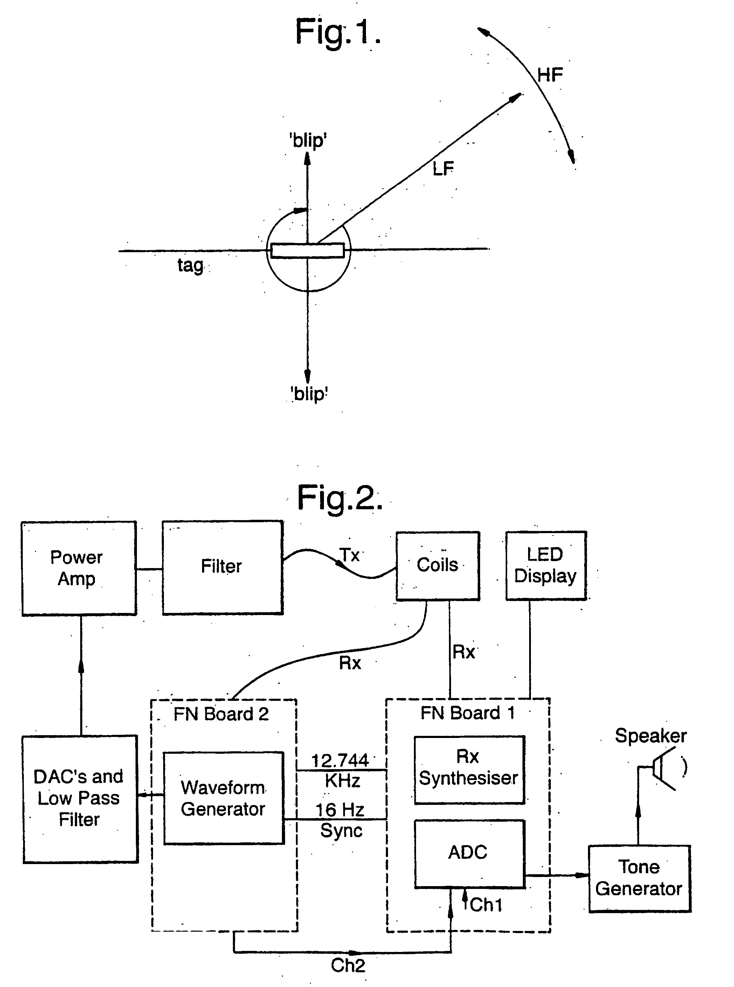

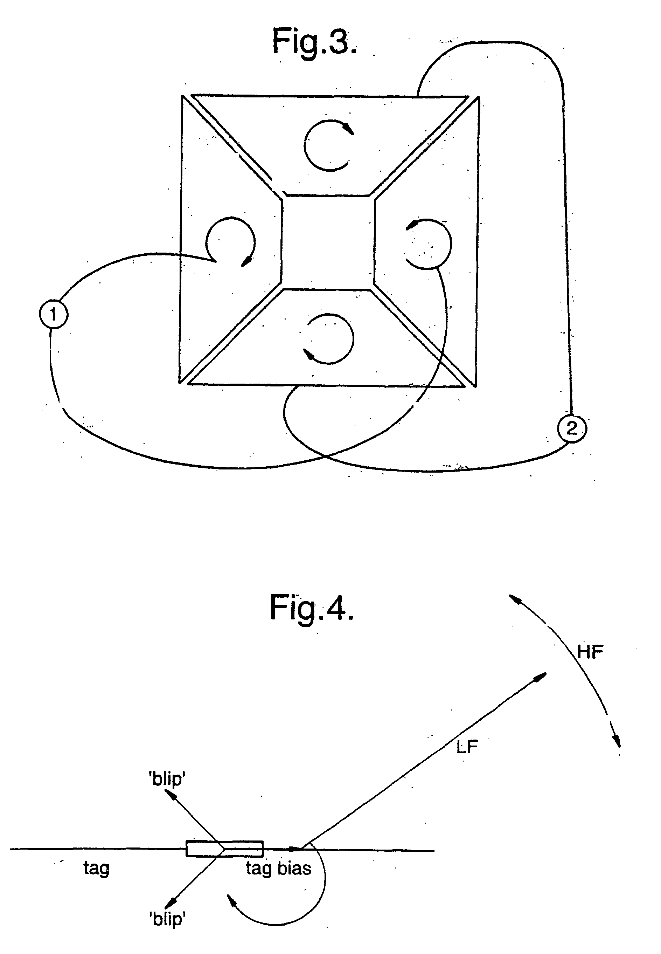

The operation of this system is best understood by first considering a much simpler system with a set of coils similar to those in the Flying Null loop reader antenna (see International Patent Publication No. WO 97/48890, especially Figure 2 and the description thereof), but additionally with a DC bias field in the plane of the coil. If a tag is placed in the centre of the loop and rotated about its mid-point in and out of the plane of the coil, the received signal in the single receiver coil will be a series of "blips", corresponding to the points when the tag is orthogonal to the bias field, i.e. the points where the tag rotates through the null plane of the system. This is illustrated in Fig. 1.

In the frame of reference of the tag, the loop antenna (which has a 6.37 kHz transmit field) and the DC bias field appear to be rotating. If the rotational position of the bias field is known as a function of time, then measurement of the time at which the blip occurs can be used to calculate the direction of the tag. This is the basis of operation of the catheter location system. Rather than spinning the coil and bias magnet, the rotation bias (i.e. LF) and HF drive fields are preferably generated by two orthogonal sets of coils. The waveforms to these coils preferably consist of a sinusoidal low frequency (LF) component onto which is superimposed an HF component whose envelope is equal to the LF signal, shifted in phase by 90 degrees.

The spinning receiver coil is again preferably synthesised from a pair of orthogonal coils, whose outputs are combined with sine and cosine weights to generate a single receive channel output.

The prototype system was constructed using two circuit boards of the type used in several Flying Null applications. These boards contain a receiver bandpass filter and low noise amplifier, a microprocessor with integral multi-input analogue to digital convertor, and a power amplifier. Board 1 is configured as a 2-channel reader, whilst board 2 is used as the basis for a waveform generator. For convenience, these will be referred to as FN boards.

The transmit coils in this example are a pair of simple, orthogonal solenoids wound on a rectangular former, with 120 turns of 0.6 mm copper wire. The windings are distributed with a.bias towards the edges of the former.

In one version of the system, the receive coils each consist of two trapezoidal coils, wound in opposite directions, such that the combined inductance is equal to 3 mH (about 150 turns of wire). (See Figure 3).

Other coil arrangements are also possible, in particular with the receivers wound as two stacked solenoids; with an arrangement of this sort, each solenoid.of the receiver is preferably half the thickness of the transmit coil. The main benefits of balanced coil configurations are to minimise direct coupling between the transmitter and the receiver and to provide rejection of far-field interference signals.

The positional resolution of the system along one axis can be improved by using a magnet to generate a static gradient field beneath the receive antenna array. For convenience, the magnet can be attached to the antenna. The magnet may be a simple permanent magnet or an electromagnet.

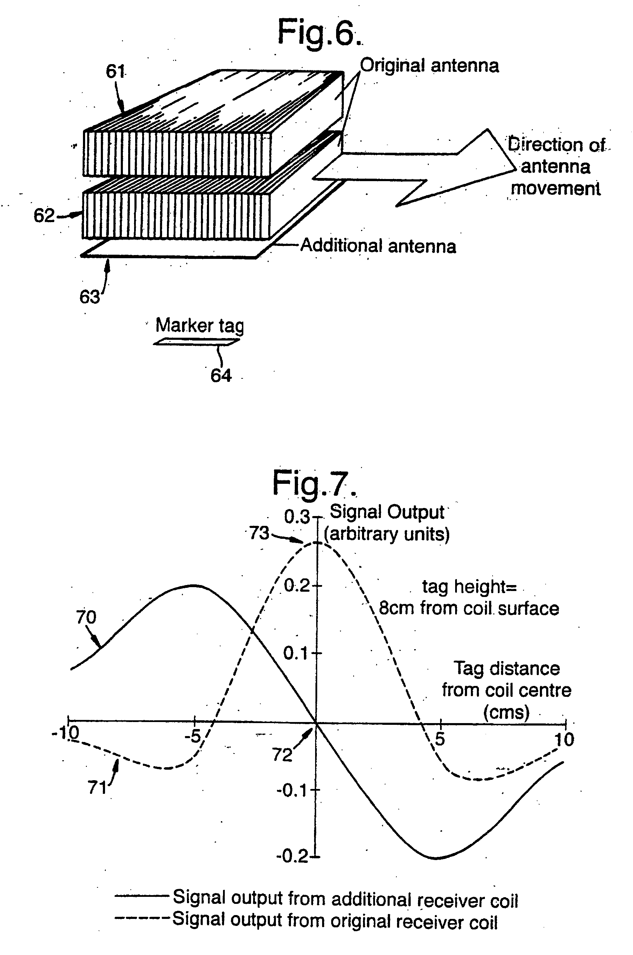

Figure 6 shows a currently preferred arrangement for the receiver coils in a system of this invention. The arrangement includes a third coil which provides signals which can be used to provide enhanced positional resolution. For clarity, it is to be noted that only one balanced coil set is shown. In the complete system, a further set of receiver coils is required, these being wound over the tops of the solenoids 61 and 62, with their winding directions at 90 degrees to those of solenoids 61 and 62. This construction may be used as an alternative to adding the gradient magnet described above. The rotational unambiguity of the system is not sacrificed with this construction, which otherwise can be described as comprising a pair of stacked solenoids 61 and 62, each of which is of identical construction, together with an additional receiver coil 63 wound around the periphery of the existing coil set. Coil 63 consists in this embodiment of 50 turns of 0.25mm copper wire. 'Its maximum output is generated when a magnetic tag (illustrated as 64 in Fig. 6) is lying in a plane parallel to that of the coil 63 and orthogonal to the winding and directly beneath the winding. No signal will be coupled into the coil from the same tag when it passes beneath the centre of the coil. Thus as a tag passes beneath this receiver arrangement, the signal received in coil 63 will first build up to a positive peak and then decrease, passing through zero to a negative peak and then tending again towards zero.

The outputs from "original" antenna 61 and 62 and the orthogonal balanced coil set not shown in Figure 6 are processed separately from'that of coil 63. This processing requires additional circuitry not indicated in Figure 2.

This response pattern of the additional coil 63 is illustrated by curve 70 in Fig. 7. By comparison, the output obtained by a receiver arrangement consisting of solenoids 61 and 62 but without coil 63 is shown by curve 71. The position of the null 72 corresponds to the point where the tag is positioned directly below the centre of the coil 63; this null point can be detected with greater precision than the position of the maximum 73 of curve 71. This is because the change in signal amplitude with change in tag position is greatest in coil 63 at the null point 72 of curve 70, whereas it is at its smallest in the case of point 73 on curve 71. This can be exploited in a simple processing algorithm which, for example, detects the occurrence of a zero-crossing signal in the additional channel (output from coil 63) when there is a signal above a predetermined threshold in the original receiver channel (i.e. output from 61 and 62 or the orthogonal balanced coil set making up the complete receiver coil array). This allows an enhancement of tag position measurement accuracy without any significant additional weight and cost.

To improve rejection of far-field interference, the coil 63 may be formed as a balanced quadruple. This could be achieved by using two simple loops connected in series and wound in ant-phase around the top and bottom of the assembly 61, 62.

A currently preferred form of construction for tag 64 comprises an element of dimensions 30mm x 0.5mm x 20 microns formed of Vacuumschmeltze 6025 spin melt ribbon. This is preferably used together with an overlaid bias element which may, for example, be of the dimensions 40mm x 0.75mm x 50 microns and may be formed of Arnokrome (Br 1.15T), fully magnetised.

The following describes the details of a prototype system. This system does not include the additional coil 63 described above for enhancing tag position measurement accuracy. The waveform generator is driven by one of the two 80552 microcontrollers. It has two 16-bit DACs which are updated at about 25 kHz. The waveforms are first generated and stored in an array. The contents of the array are then clocked out to the DAC's to generate the waveforms. The DAC's are double-buffered, so that the data can be entered asynchronously, but the new values can be latched simultaneously and synchronously for both channels using a hardware clock. Two RC filters are used on each output to remove the higher harmonics. Each time the array cycles round, a short pulse is generated which is used to synchronise the waveform generator with the second FN board (see below).

The waveforms are generated using equations of the form:

$$x_n = LF.\sin\{2\pi n/N + p\} +$$

$$HF.\cos\{2\pi n/N\}.\sin\{2\pi n/4 + ph1\}$$

$$y_n = LF.\cos\{2\pi n/N + p\} -$$

$$HF.\sin\{2\pi n/N\}.\sin\{2\pi n/4 + ph2\}$$

A 160w MOSFET stereo power amplifier was chosen to drive the coils. This was the simplest method to integrate suitable power amplifiers and their power supply into a single box. The filter consists of a high-Q parallel resonant circuit (resonant at 12.744 Khz, i.e. at the second harmonic frequency) in series with the transmit coil. The transmit coil also forms part of a parallel resonant circuit at 6.37 kHz.

The two sets of orthogonal balanced coil sets are connected to the two sets of receiver coils. The boards are synchronised together by coupling the 12.744 kHz detection signal from the waveform generator board to the second board.

The second FN board forms the basis of the receive coil synthesizer. Both receivers are sampled at a rate of 3.186 kHz. The least significant 2 bits of the 10 bit result can be discarded because to reduce processing time.

Initially, the system samples background values, and stores these in an array. This array is indexed by the sample number since the last synchronisation pulse. A total of 192 samples are expected between each sync pulse from the waveform generator.

Once a set of background values has been acquired, the system enters normal operation. In this mode, the indexed background value is initially subtracted from the incoming receiver values. After limiting the values to prevent later maths overflow, each channel is then multiplied by either cos (channel 1(R)) or sin (channel 2 (L)) of the rotation angle, and in operation the results are added together to generate the final synthesized receive signal. This is output in real time via a PWM for display on an oscilloscope.

A peak and zero-crossing detection algorithm adapted from the original FN tag decoding system is used to determine where peaks occur. The polarity of the recovered signals is always the same (i.e. the negative peak is always first). Rather than determining the time at which the mid-point between the peak and the trough occurs (as in the FN tag reader), the system picks the point at which the signal crosses through zero from the negative direction.

For each complete cycle (i.e. one revolution of the LF field), two zero crossings should be detected. In the absence of any external fields, these should be exactly equally spaced in time (as illustrated in Fig. 1). When a DC field is present along the tag, the times at which the net gradient along the tag is zero are no longer equally spaced, and an asymmetry occurs in the timing of the zero crossings (see Fig. 4). This asymmetry is used to resolve the 180 degree ambiguity over the direction of the tag. The direction is calculated from the time which is exactly in the centre of the shorter of the two gaps. This information is converted and fed to a set of 8 LED's to indicate the angle.

An audible indication of the proximity of the tag is generated by feeding information on the amplitude of the signal via a PWM output to a voltage-to-frequency converter, which drives a small speaker. A similar arrangement may be used to drive the AGC proposed in the modification mentioned below.

The amplitude information is differentiated to determine the point of closest approach to the tag. When this is detected, an audible beep is generated.

The dynamic range, and hence the range over which the tag reader will operate, can be extended by implementing a simple AGC. The receiver board generates a signal (the AGC voltage) which sets the overall amplitude of the waveform generator. Initially, this is set at its maximum value, but if the input to the receiver begins to overload, the AGC voltage is reduced in steps until the receiver signal is the correct amplitude. As the background level depends on the waveform generator drive level, the system captures background signals for a number of different drive levels before tag detection begins.

With large bias fields on the tag, the familiar symmetric tag signal becomes distorted into a simple peak. The detection algorithm can be modified to accept this signal instead, following the use of larger bias fields and reducing any possibility of the ambiguity of tag direction.

In operation, the antenna coil is manually scanned across the region containing the tag. When the tag is near enough, the warble tone will be heard, and the LED closest to the correct direction will illuminate. The warble tone indicates proximity to the tag by its pitch.

The LED's indicate direction. The LED display will track the tag direction, unambiguously, over a full 360 degrees.

The transmit coils in the embodiment just described were as follows:

| Size | 132 mm x 132 mm x 53 mm high |
|---|---|
| Turns | 120 turns of 0.6 mm wire |
| Inductance | 863 μH |
| Resistance | 3.45 Ω |
| Q @ 6.37 kHz | 10 |
| LF current | 3.1 A peak (cold) |
| | 3.0 A peak (warm) |
| HF current | 3.5A peak-peak (warm) |
| LF dipole moment | 2.52 Am$^2$ |

(continued)

| HF dipole moment | 1.47 Am$^2$ |
|---|---|
| Power dissipation | 31.5 w (LF) |
| | 7.6 W W (HF) |
| | 39 W total for whole antenna |

and the receive coils had the following characteristics:

| Inductance | 3.15 mH |
|---|---|
| Q | 9.4 @ 10 kHz |
| Quadruple moment | 0.048 Am$^3$ |

The performance of the system is as follows:

| Detection range: | 150 mm for 30 mm long tag |
|---|---|
| Angular resolution: | 2 degrees |
| Angular display | nearest 22½ degrees |

While the invention has been described with specific reference to certain embodiments thereof, it. will be apparent to those of ordinary skill in the art that it may be used in a variety of circumstances other than those described herein. Such additional uses form part of this invention, as defined in the appended claims.

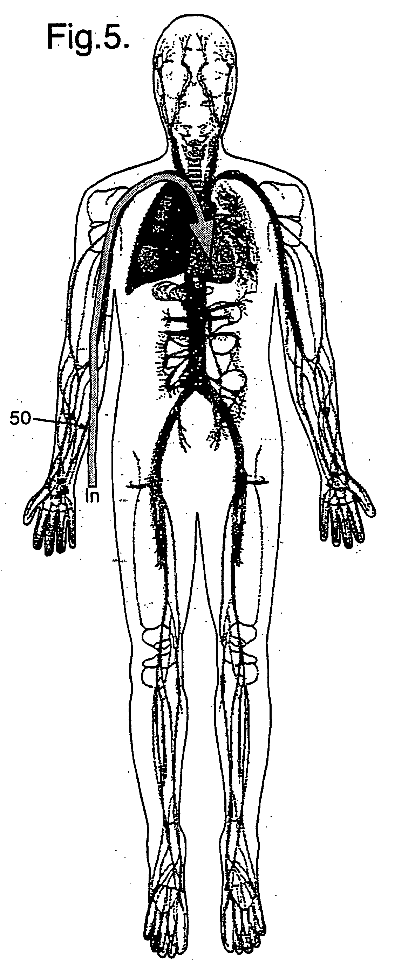

Referring to Figure 5, a catheter in accordance with this invention may be inserted into a vein as at 50 and then be guided to the site where drug delivery is required - in this illustration, to the heart. The system described above may be used to determine progress of the catheter towards the heart, giving information about its direction at any given time as required, and also enabling the final positioning of the catheter tip to be achieved with great accuracy.

**Claims**

1.  A method of determining the position and orientation of a surgical device within the human or animal body, which method comprises the steps of:

    i) inserting the surgical device into the body together with a magnetically active marker which is associated with a predetermined location on the surgical device, the marker comprising high permeability, low coercivity magnetic material and a magnetic bias element;
    ii)generating a rotating magnetic field in the vicinity of the surgical device, said rotating magnetic field comprising a rotating DC bias field component;
    iii) sensing the position and orientation of the marker, and hence of the surgical device, by remotely detecting the magnetic response of said marker to said rotating magnetic field, wherein the field created by the magnetic bias element, when subjected to the rotating magnetic field, causes the marker to give an asymmetric magnetic response for marker orientations 180 degrees apart.

2.  A method according to claim 1, wherein said surgical device is a catheter.

3.  A method according to claim 2, wherein said marker is located close to the tip of the catheter (i.e. that end of the catheter which first enters the body).

4.  A method according to claim 2 or 3, wherein the marker is provided on a guide wire used during insertion of the catheter.

5.  A method according to claim 1, 2, 3 or 4, wherein said marker is in the form of a thin film, a wire or a strip.

6.  A method according to claim 1, wherein said surgical device is a prosthesis.

7.  A method as claimed in any preceding claim, wherein the rotating magnetic field further comprises a high frequency AC field component.

8.  A method as claimed in any preceding claim, wherein the rotating magnetic field is generated by a pair of orthogonally arranged solenoids which function as transmit coils.

9.  A method as claimed in claim 8, wherein said transmit coils are supplied with waveforms comprising a sinusoidal low frequency signal component onto which is superimposed a high frequency signal component whose envelope is equal to the low frequency signal but shifted in phase by 90 degrees.

10. A method as claimed in any preceding claim, wherein the magnetic response of the marker to said rotating magnetic field is detected by means of pair of orthogonally arranged solenoids which function as receive coils.

11. A system for use in determining the position and orientation of a surgical device within the human or animal body, which system comprises:

    (i) a surgical device which carries, at a predetermined location, a magnetically active marker comprising high permeability, low coercivity magnetic material and a magnetic bias element;
    (ii) means for generating a rotating magnetic field comprising a rotating DC bias field component; and
    (iii) means for detecting the magnetic response of the marker to the rotating magnetic field, wherein the field created by the magnetic bias element, when subjected to the rotating magnetic field, causes the marker to give an asymmetric magnetic response for marker orientations 180 degrees apart.

12. A system as claimed in claim 11, wherein wherein the rotating magnetic field further comprises a high frequency AC field component and a DC bias field component.

13. A system as claimed in claim 11 or 12, wherein the rotating magnetic field is generated by a pair of orthogonally arranged solenoids which function as transmit coils.

14. A system as claimed in claim 13, wherein said transmit coils are supplied with waveforms comprising a sinusoidal low frequency signal component onto which is superimposed a high frequency signal component whose envelope is equal to the low frequency signal but shifted in phase by 90 degrees.

15. A system as claimed in any one of claims 11 to 14, wherein the magnetic response of the marker to said rotating magnetic field is detected by means of pair of orthogonally arranged solenoids which function as receive coils.

16. A system as claimed in claim 15, wherein the outputs of the receive coils are combined with sine and cosine weightings to generate a single receive output.

**Patentansprüche**

1.  Verfahren zum Bestimmen der Position und Ausrichtung einer chirurgische Vorrichtung innerhalb des menschlichen oder tierischen Körpers, wobei das Verfahren die folgenden Schritte aufweist:

    i) Einführen der chirurgischen Vorrichtung in den Körper zusammen mit einer magnetisch aktiven Markierung, die einer vorgegebenen Stelle auf der chirurgischen Vorrichtung zugeordnet ist, wobei die Markierung magnetisches Material hoher Permeabilität und niedriger Koerzitivität und ein Vormagnetisierungselement aufweist;
    ii) Erzeugen eines rotierenden Magnetfeldes in der Nähe der chirurgischen Vorrichtung, wobei das rotierende Magnetfeld eine Gleichstromvormagnetisierungs-Feldkomponente aufweist;
    iii) Erfassen der Position und Ausrichtung der Markierung und somit der chirurgischen Vorrichtung durch Ferndetektierung der magnetischen Antwort der Markierung auf das rotierende Magnetfeld, wobei das durch das Vormagnetisierungselement erzeugte Feld, wenn es dem rotierenden Magnetfeld ausgesetzt ist, bewirkt, dass die Markierung eine asymmetrische magnetische Antwort für Markierungsausrichtungen mit einem Unterschied von 180° abgibt.

2.  Verfahren nach Anspruch 1, wobei die chirurgische Vorrichtung ein Katheter ist.

3. Verfahren nach Anspruch 2, wobei die Markierung nahe an der Spitze des Katheters (d. h. demjenigen Ende des Katheters, der zuerst in den Körper eintritt) gelegen ist.

4. Verfahren nach Anspruch 2 oder 3, wobei die Markierung auf einem Führungsdraht vorhanden ist, der während des Einschubs des Katheters verwendet wird.

5. Verfahren nach einem der Ansprüche 1 bis 4, wobei die Markierung in Form eines dünnen Filmes, eines Drahtes oder eines Streifens vorliegt.

6. Verfahren nach Anspruch 1, wobei die chirurgische Vorrichtung eine Prothese ist.

7. Verfahren nach einem der vorstehenden Ansprüche, wobei das rotierende Magnetfeld darüber hinaus eine hochfrequente Wechselstrom-Feldkomponente aufweist.

8. Verfahren nach einem der vorstehenden Ansprüche, wobei das rotierende Magnetfeld von einem Paar orthogonal angeordnete Magnetspulen erzeugt wird, die als Übertragungsspulen wirken.

9. Verfahren nach Anspruch 8, wobei die Übertragungsspulen mit Wellenformen gespeist werden, die eine sinusförmige niederfrequente Signalkomponente umfassen, die von einer hochfrequenten Signalkomponente überlagert wird, deren Hülle gleich dem niederfrequenten Signal ist, gegenüber jenem jedoch um 90° phasenverschoben ist.

10. Verfahren nach einem der vorstehenden Ansprüche, wobei die magnetische Antwort der Markierung auf das rotierende Magnetfeld mittels eines Paars orthogonal angeordneter Magnetspulen detektiert wird, die als Empfängerspulen wirken.

11. System zur Verwendung beim Bestimmen der Position und Ausrichtung einer chirurgischen Vorrichtung innerhalb des menschlichen oder tierischen Körpers, aufweisend:

(i) eine chirurgische Vorrichtung, die an einer vorbestimmten Stelle eine magnetisch aktive Markierung trägt, welche magnetisches Material hoher Permeabilität und niedriger Koerzitivität und ein Vormagnetisierungselement trägt;
(ii) Mittel zum Erzeugen eines rotierenden Magnetfeldes, das eine rotierende Gleichstromvormagnetisierungs-Feldkomponente umfasst; und
(iii) Mittel zum Detektieren der magnetischen Antwort der Markierung auf das rotierende Magnetfeld, wobei das vom Vormagnetisierungselement erzeugte Feld, wenn es dem rotierenden Magnetfeld ausgesetzt wird, bewirkt, dass die Markierung eine asymmetrische magnetische Antwort für Markierungsausrichtungen mit einem Unterschied von 180° abgibt.

12. System nach Anspruch 11, wobei das rotierende Magnetfeld eine hochfrequente Wechselstrom-Feldkomponente und eine Gleichstromvormagnetisierungs-Feldkomponente umfasst.

13. System nach Anspruch 11 oder 12, wobei das rotierende Magnetfeld durch ein Paar orthogonal angeordnete Magnetspulen erzeugt wird, die als Übertragungsspulen wirken.

14. System nach Anspruch 13, wobei die Übertragungsspulen mit Wellenformen gespeist werden, die eine sinusförmige niederfrequente Signalkomponente umfassen, die von einer hochfrequenten Signalkomponente überlagert wird, deren Hülle gleich dem niederfrequenten Signal ist, gegen jenes jedoch um 90° phasenverschoben ist.

15. System nach einem der Ansprüche 11 bis 14, wobei die magnetische Antwort der Markierung auf das rotierende Magnetfeld durch ein Paar orthogonal angeordnete Magnetspulen detektiert wird, welche als Empfängerspulen wirken.

16. System nach Anspruch 15, wobei die Ausgänge der Empfängerspulen mit sinusförmigen und kosinusförmigen Gewichtungen kombiniert werden, um einen einzelnen Empfangsausgang zu erzeugen.

**Revendications**

1. Procédé pour déterminer la position et l'orientation d'un instrument chirurgical dans le corps d'un être humain ou d'un animal, lequel procédé comporte les étapes consistant à :

   i) insérer l'instrument chirurgical dans le corps ainsi qu'un marqueur magnétiquement actif qui est associé à un emplacement prédéterminé sur l'instrument chirurgical, le marqueur comportant une substance magnétique à perméabilité élevée et à coercivité faible et un élément de polarisation magnétique,
   ii) générer un champ magnétique tournant à proximité de l'instrument chirurgical, ledit champ magnétique tournant comportant une composante de champ de polarisation continue (DC) tournant,
   iii) détecter la position et l'orientation du marqueur, et donc de l'instrument chirurgical, en détectant à distance la réponse magnétique dudit marqueur audit champ magnétique tournant, où le champ créé par l'élément de polarisation magnétique, lorsqu'il est soumis au champ magnétique tournant, amène le marqueur à délivrer une réponse magnétique asymétrique pour des orientations de marqueur séparées de 180 degrés.

2. Procédé selon la revendication 1, dans lequel ledit instrument chirurgical est un cathéter.

3. Procédé selon la revendication 2, dans lequel ledit marqueur se trouve à proximité de la pointe du cathéter (c'est-à-dire l'extrémité du cathéter qui entre la première dans le corps).

4. Procédé selon la revendication 2 ou 3, dans lequel le marqueur est agencé sur un fil de guidage utilisé durant l'insertion du cathéter.

5. Procédé selon la revendication 1, 2, 3 ou 4, dans lequel ledit marqueur est sous la forme d'un film mince, d'un fil ou d'une bande.

6. Procédé selon la revendication 1, dans lequel ledit instrument chirurgical est une prothèse.

7. Procédé selon l'une quelconque des revendications précédentes, dans lequel le champ magnétique tournant comporte en outre une composante de champ alternatif (AC) de fréquence élevée.

8. Procédé selon l'une quelconque des revendications précédentes, dans lequel le champ magnétique tournant est généré par une paire de solénoïdes orthogonalement agencés qui fonctionnent comme des bobines de transmission.

9. Procédé selon la revendication 8, dans lequel lesdites bobines de transmission sont alimentées par des formes d'onde comportant une composante de signal de fréquence faible sinusoïdale sur laquelle est superposée une composante de signal de fréquence élevée dont l'enveloppe est égale au signal de fréquence faible mais déphasée de 90 degrés.

10. Procédé selon l'une quelconque des revendications précédentes, dans lequel la réponse magnétique du marqueur audit champ magnétique tournant est détectée par l'intermédiaire d'une paire de solénoïdes orthogonalement agencés qui fonctionnent comme des bobines de réception.

11. Système destiné à être utilisé dans la détermination de la position et de l'orientation d'un instrument chirurgical dans le corps d'un être humain ou d'un animal, lequel système comporte :

    (i) un instrument chirurgical qui supporte, à un emplacement prédéterminé, un marqueur magnétiquement actif comportant une substance magnétique à perméabilité élevée et à coercivité faible et un élément de polarisation magnétique,
    (ii) des moyens pour générer un champ magnétique tournant comportant une composante de champ de polarisation DC tournant, et
    (iii) des moyens pour détecter la réponse magnétique du marqueur au champ magnétique tournant, où le champ crée par l'élément de polarisation magnétique, lorsqu'il est soumis au champ magnétique tournant, amène le marqueur à délivrer une réponse magnétique asymétrique pour des orientations de marqueur séparées de 180 degrés.

12. Système selon la revendication 11, dans lequel le champ magnétique tournant comporte en outre une composante de champ AC de fréquence élevée et une composante de champ de polarisation DC.

13. Système selon la revendication 11 ou 12, dans lequel le champ magnétique tournant est généré par une paire de solénoïdes orthogonalement agencés qui fonctionnent comme des bobines de transmission.

14. Système selon la revendication 13, dans lequel lesdites bobines de transmission sont alimentées par des formes d'ondes comportant une composante de signal de fréquence faible sinusoïdale sur laquelle est superposée une composante de signal de fréquence élevée dont l'enveloppe est égale au signal de fréquence faible mais déphasée de 90 degrés.

15. Système selon l'une quelconque des revendications 11 à 14, dans lequel la réponse magnétique du marqueur audit champ magnétique tournant est détectée par l'intermédiaire d'une paire de solénoïdes orthogonalement agencés qui fonctionnent comme des bobines de réception.

16. Système selon la revendication 15, dans lequel les sorties des bobines de réception sont combinées à des pondérations sinus et cosinus pour générer une sortie de réception unique.

# Fig.1.

# Fig.2.

# Fig.3.

# Fig.4.

Fig.5.

# Fig.6.

61

Original antenna

62

63

Additional antenna

Direction of
antenna
movement

Marker tag

64

# Fig.7.

0.3 — Signal Output
(arbitrary units)

73

70

tag height=
8cm from coil surface

0.2

0.1

Tag distance
from coil centre
(cms)

-10        -5

72

5        10

71

-0.1

-0.2

———— Signal output from additional receiver coil
– – – – Signal output from original receiver coil